# EUROPÄISCHE PATENTANMELDUNG

(11) **EP 1 122 101 A2**
(43) Veröffentlichungstag der Anmeldung: **08.08.2001**
(21) Anmeldenummer: 01101853.8
(22) Anmeldetag: 26.01.2001
(51) Int. Cl.: B60G 11/28, B60G 3/20

(54) **Radaufhängung für Fahrzeuge, insbesondere Nutzfahrzeuganhänger**

(30) Priorität: 01.02.2000 DE 10004227
(71) Anmelder: BPW Bergische Achsen Kommanditgesellschaft, 51674 Wiehl (DE)
(72) Erfinder: Ebert, Jörg, Dr., 50858 Köln (DE); Adolfs, Manfred, 51702 Bergneustadt (DE)
(74) Vertreter: Stenger, Watzke & Ring Patentanwälte

(57) **Zusammenfassung**

Die Erfindung betrifft eine Radaufhängung für Fahrzeuge, insbesondere Nutzfahrzeuganhänger, mit einem über mindestens eine Federung sowie mehrere Längs- und Querlenker (4, 5) an einem Fahrzeugrahmen (3) gelagerten Achskörper, wobei Teile des Fahrzeugrahmens (3) oder lenkeraufnehmende Stützen auf der Außenseite der Räder (6) in vertikaler Richtung bis über die Räder (6) herabgezogen ausgebildet sind. Um eine Radaufhängung so auszugestalten, daß auch der Raum zwischen den sich in Fahrtrichtung einander gegenüberliegenden Rädern (6) als Stauraum nutzbar ist, wird erfindungsgemäß vorgeschlagen, daß der Achskörper als Achsstummel (8) zur Lagerung des Rades (6) ausgebildet ist, der an einem sich am Fahrzeugrahmen (3) abstützenden Achsträger (1) festgelegt ist, und daß die Querlenker (5) sich ausgehend von der einseitigen Anlenkung an dem Achsträger (1) in Richtung des Achsstummels (8) über zumindest nahezu die Breite des Rades (6) hinaus erstrecken und mit ihren anderen Enden am Fahrzeugrahmen (3) angelenkt sind.

## Beschreibung

Die Erfindung betrifft eine Radaufhängung für Fahrzeuge, insbesondere Nutzfahrzeuganhänger, mit einem über mindestens eine Federung, insbesondere mindestens einen Federbalg, sowie mehrere Längs- und Querlenker an einem Fahrzeugrahmen gelagerten Achskörper, wobei Teile des Fahrzeugrahmens oder lenkeraufnehmende Stützen auf der Außenseite der Räder in vertikaler Richtung bis über die Räder herabgezogen ausgebildet sind.

Die gebräuchlichen, aus der Praxis allgemein bekannten Nutzfahrzeuganhänger weisen zwei parallele, sich zwischen den Rädern in Fahrtrichtung erstreckende Längsträger auf, an deren Unterseite die einzelnen Achskörper beispielsweise über Luftfederbälge gefedert sind. Der Aufbau des Nutzfahrzeuganhängers ist auf der Oberseite der Längsträger angeordnet. Zur Einstellung der Spur sowie des Sturzes der einzelnen Räder sind ferner nach innen zum Fahrzeugrahmen weisende und an diesem gelagerte Längs- und/oder Querlenker vorgesehen. Die Achskörper dieser bekannten Radaufhängungen für Nutzfahrzeuganhänger sind dabei im allgemeinen als durchgehende starre Achsstangen ausgebildet, an deren beiden Enden jeweils ein Rad gelagert ist.

Da die durchgehenden Achskörper die gesamte freie Breite des Anhängers überspannen, kann dieser zusätzliche Stauraum nur von der Seite zugänglich abseits der Radaufhängungen ausgebildet werden.

Der Erfindung liegt die **Aufgabe** zugrunde, eine Radaufhängung der eingangs genannten Art so weiterzuentwickeln, daß auch der Raum zwischen den sich in Fahrtrichtung gesehen einander gegenüberliegenden Rädern als nutzbarer Stauraum zur Verfügung steht.

Die **Lösung** dieser Aufgabenstellung ist erfindungsgemäß dadurch gekennzeichnet, daß der Achskörper als Achsstummel zur Lagerung des Rades ausgebildet ist, der an einem sich am Fahrzeugrahmen abstützenden Achsträger festgelegt ist, und daß die Querlenker sich ausgehend von der einseitigen Lagerung an dem Achsträger über zumindest nahezu die Breite des jeweiligen Rades hinaus erstrecken und mit ihrem anderen Ende gelenkig an den äußeren Teilen des Fahrzeugrahmens angelenkt sind.

Durch den Übergang vom durchgehenden starren Achskörper, an dem beidseitig jeweils ein Rad gelagert ist, hin zur Verwendung von Achsstummeln zur Lagerung nur eines Rades wird die Möglichkeit gegeben, den Raum zwischen den sich in Fahrtrichtung gesehen einander gegenüberliegenden Rädern zu nutzen. Neben der Verwendung der Achsstummel ist es zur Nutzbarmachung dieses Stauraums aber auch notwendig, die aus der Praxis bekannte Lagerung der nach innen zum Fahrzeugrahmen weisenden Querlenker zu modifizieren. Hierzu wird erfindungsgemäß erstmalig vorgeschlagen, daß die Querlenker die jeweiligen Räder in der Breite übergreifen, wodurch der Raum zwischen den sich einander gegenüberliegenden Rädern frei von sonstigen Aggregaten der Radaufhängung bleibt und somit als Laderaum zur Verfügung steht.

Gemäß einer bevorzugten Ausführungsform der Erfindung ist der Achsträger auf der Radinnenseite angeordnet und sind die Querlenker an dem seitlich herabgezogenen Teil des Fahrzeugrahmens gelagert. Diese Ausführungsform, bei der der Achsträger auf der Radinnenseite angeordnet ist, ist insbesondere bei der Montage und Demontage der Räder vorteilhaft. Selbstverständlich ist es aber auch möglich, den Achsträger auf der Radaußenseite anzuordnen, wobei dann die Querträger die Radbreite übergreifend an einem inneren Teil des Fahrzeugrahmens gelagert sind.

Um die Spurstabilität eines jeden Rades zu gewährleisten, ist jeder Achsträger über mindestens drei Querlenker am Fahrzeugrahmen gelagert, wobei mindestens zwei Querlenker die Radbreite an der einen Seite übergreifen und mindestens ein Querlenker die Radbreite an der gegenüberliegenden Seite dieses Rades übergreift. Durch die Verwendung von mindestens drei Querlenkern wird sichergestellt, daß das Rad bei auftretenden Querkräften nicht zu flattern beginnt und die Spurhaltung gewährt ist. Die Einstellung der Spur erfolgt durch Verstellen wenigstens eines Querlenkers.

Um die über die Längslenker aufzunehmenden Kräfte zu minimieren und das Maß der Längsverlagerung eines Rades beim Ein- und Ausfedern zu reduzieren, wird gemäß einer bevorzugten Ausführungsform der Erfindung vorgeschlagen, daß die Längslenker in Vertikalrichtung übereinander liegend möglichst weit voneinander beabstandet am Achsträger gelagert sind. Durch die Parallelführung des Achsträgers sowohl über die Längslenker als auch über die Querlenker ergibt sich insgesamt eine sehr stabile Radführung mit einer im wesentlichen nur vertikalen Bewegung des Rades beim Ein- und Ausfedern.

Der die Bremsvorrichtung und somit das Rad tragende Achsstummel ist gemäß einer ersten Ausführungsform der Erfindung mit dem Achsträger verschraubt, so daß zu Reparaturzwecken der Achsstummel mitsamt der Bremsvorrichtung einfach vom Achsträger getrennt werden kann.

Gemäß einer zweiten Ausführungsform der Erfindung wird vorgeschlagen, daß der Achsstummel mit dem Achsträger verschweißt ist.

Weiterhin wird mit der Erfindung vorgeschlagen, daß zur schnellen Tilgung von Schwingungen zwischen dem Achsträger und dem Fahrzeugrahmen mindestens ein Stoßdämpfer angeordnet ist.

Schließlich wird mit der Erfindung vorgeschlagen, daß der Achsträger als in Seitenansicht H-förmiges, doppelwandiges und über mehrere Querstreben versteiftes Hohlprofil ausgebildet ist. Diese Ausbildung des Achsträgers ist besonders gut dazu geeignet, die beim Fahr- und Bremsvorgang auftretenden Kräfte aufzunehmen und über die Längs- und Querlenker auf den Fahrzeugrahmen abzuleiten.

Weitere Merkmale und Vorteile der Erfindung ergeben sich aus der nachfolgenden Beschreibung der zugehörigen Zeichnung, in der ein Ausführungsbeispiel einer erfindungsgemäßen Radaufhängung beispielhaft schematisch dargestellt ist. In der Zeichnung zeigt:
- Fig. 1: eine Seitenansicht einer erfindungsgemäßen Radaufhängung mit nur schematisch angedeutetem Rad;
- Fig. 2: eine schematische Vorderansicht der Radaufhängung gemäß Fig. 1 und
- Fig. 3: eine schematische Ansicht von oben auf die Radaufhängung gemäß Fig.1 und 2.

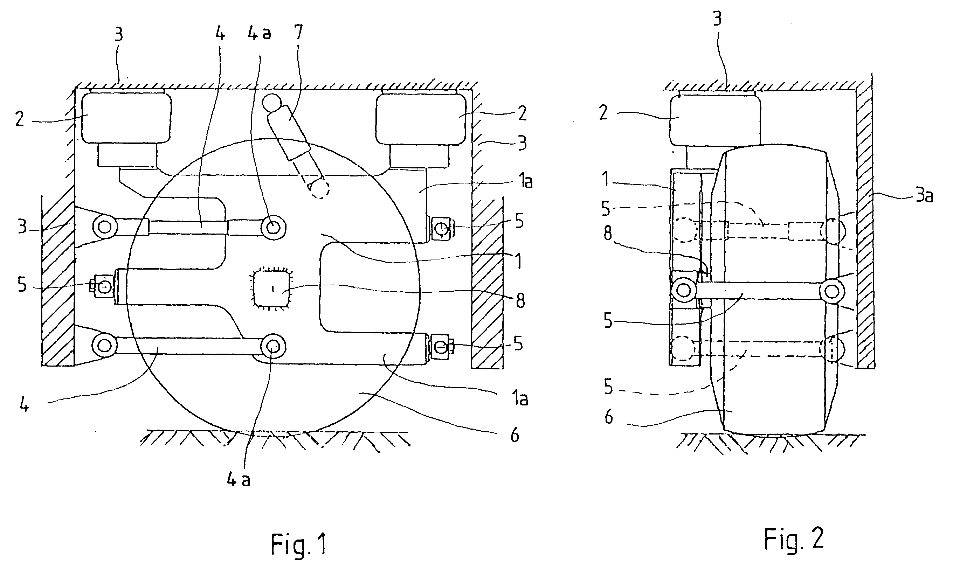

Die in Fig. 1 dargestellte Radaufhängung besteht im wesentlichen aus einem Achsträger 1, der im dargestellten Ausführungsbeispiel über zwei Luftfederbälge 2 als Federungselemente an den oberhalb angeordneten Teilen eines Fahrzeugrahmens 3 gelagert ist. Der Achsträger 1 ist ferner über zwei Längslenker 4 und drei Querlenker 5 am tragenden Fahrzeugrahmen 3 des Fahrzeugs bzw. an mit dem Fahrzeugrahmen starr verbundenen Teilen gelagert. Die Querlenker 4 und 5 dienen dazu, die Spur und den Radsturz eines an dem Achsträger 1 gelagerten Rades 6 einzustellen und beizubehalten. Aus Gründen der besseren Übersichtlichkeit wurde bei der Darstellung gemäß Fig. 1 das Rad 6 in der Normalstellung nur schematisch angedeutet.

Neben der dargestellten Ausbildung der Federung zwischen dem Achsträger 1 und dem Fahrzeugrahmen 3 als Luftfederbälge 2 ist es selbstverständlich auch möglich, z. B. Blattfedern zu verwenden. Um möglichst schnell auftretende Schwingungen zu tilgen, ist zwischen dem Achsträger 1 und dem Fahrzeugrahmen 3 zusätzlich ein Stoßdämpfer 7 angeordnet.

Der Achsträger 1 ist als doppelwandiges, durch Querstreben versteiftes Hohlprofil ausgebildet. Beim dargestellten Ausführungsbeispiel ist der Achsträger 1 in etwa in der Form eines auf der Seite liegenden H ausgebildet, wobei die Federbälge 2 auf der Oberseite des oberen der parallel zueinander verlaufenden Schenkel 1a angeordnet sind.

Das Rad 6 selbst ist über einen Achsstummel 8 und eine auf dem Achsstummel angeordnete, in der Zeichnung nicht dargestellte Bremsvorrichtung an dem Achsträger 1 gelagert. Bei der dargestellten Ausführungsform ist der Achsstummel 8 in den Achsträger 1 eingesteckt und mit dem Achsträger 1 verschweißt. Gemäß einer anderen, nicht dargestellten Ausführungsform ist der Achsstummel 8 mit dem Achsträger 1 verschraubt.

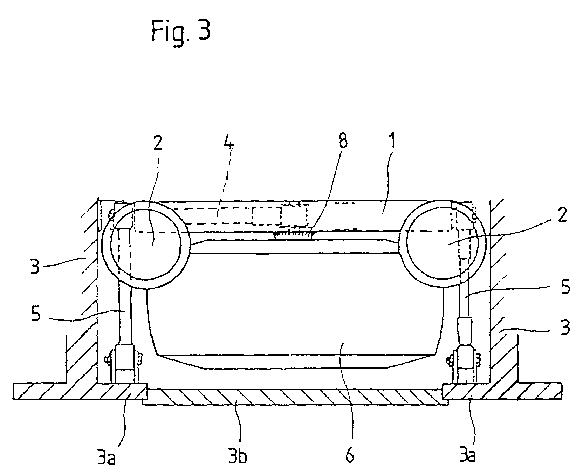

Die Anlenkung der Längslenker 4 sowie der Querlenker 5 ist den Abbildungen Fig. 1 und 3 zu entnehmen. Die zwei Längslenker 4 sind einseitig vertikal übereinander an einer Seite des Achsträgers 1 angelenkt. Mit dem anderen Ende sind die Längslenker 4 an starren Teilen des Fahrzeugrahmens 3 gelagert. Durch die parallele Anordnung der Längslenker 4 wird der Achsträger 1 in Längsrichtung, d.h. in Fahrtrichtung so geführt, daß der Achsträger 1 stets parallel zur Rahmenkonstruktion geführt ist. Wie aus Fig. 1 ersichtlich, liegen die Lagerpunkte 4a der Längslenker 4 am Achsträger 1 möglichst weit auseinander, um die an den Längslenkern 4 im Fahrbetrieb auftretenden Kräfte zu minimieren, und beim Ein- und Ausfedern des Rades 6 eine möglichst geringe Verlagerung des Rades 6 in Längsrichtung zu bewirken.

Ebenso wie die Längslenker 4, sind auch die Querlenker 5 zum einen am Achsträger 1 und zum anderen an Teilen 3a angelenkt, die starr mit dem Fahrzeugrahmen verbunden sind. Wie aus Fig. 3 ersichtlich, erstrecken sich die Querlenker 5 ausgehend vom Achsträger 1 in Richtung des am Achsträger 1 festgelegten Achsstummel 8 so weit, daß sie die Breite des Rades 6 zumindest teilweise übergreifen, um eine Anlenkung an einem Teil 3a des Fahrzeugrahmens 3 zu ermöglichen, der sich entlang der Längsseiten des Fahrzeugs in vertikaler Richtung herab bis über die Radnabe erstreckt. Diese seitlich außerhalb der Räder liegenden Rahmenteile 3a des Fahrzeugrahmens 3 sind beim Ausführungsbeispiel starre vertikale Stützen, deren Gestaltung und Anordnung der Fig. 2 sowie der Draufsicht gemäß Fig. 3 zu entnehmen ist. Zu Montage- und Demontagezwecken der Räder 6 sind zwischen den Rahmenteilen bzw. Stützen 3a zumindest im Bereich eines jeden Rades 6 segmentweise Abdeckungen 3b einsetzbar, die Bestandteil des so gebildeten Fahrzeug-Außenrahmens sein können.

Die beschriebene Radaufhängung zeichnet sich vorteilhaft dadurch aus, daß durch die Verwendung der Achsstummel 8 an Stelle der üblichen durchgehenden Achskörper der Raum zwischen den in Fahrtrichtung einander gegenüberliegenden Rädern 6 als Stauraum zur Verfügung steht. Die die Räder 6 der Breite nach übergreifenden Querlenker 5 ermöglichen ebenso die volle Nutzung des zwischen den Rädern 6 vorhandenen Stauraums von der Rückseite des Fahrzeugs her.

### Bezugszeichenliste

- 1: Achsträger
- 1a: Schenkel
- 2: Luftfederbalg
- 3: Fahrzeugrahmen
- 3a: äußeres Teil des Fahrzeugrahmens, vertikale Stütze
- 3b: Abdeckung
- 4: Längslenker
- 4a: Lagerpunkt
- 5: Querlenker
- 6: Rad (in Normalposition)
- 7: Stoßdämpfer
- 8: Achsstummel

## Patentansprüche

1. Radaufhängung für Fahrzeuge, insbesondere Nutzfahrzeuganhänger, mit einem über mindestens eine Federung, insbesondere mindestens einen Federbalg (2), sowie mehrere Längs- und Querlenker (4, 5) an einem Fahrzeugrahmen (3) gelagerten Achskörper, wobei Teile des Fahrzeugrahmens oder lenkeraufnehmende Stützen auf der Außenseite der Räder (6) in vertikaler Richtung bis über die Räder (6) herabgezogen ausgebildet sind,
**dadurch gekennzeichnet**,
daß der Achskörper als Achsstummel (8) zur Lagerung des Rades (6) ausgebildet ist, der an einem sich am Fahrzeugrahmen (3) abstützenden Achsträger (1) festgelegt ist, und daß die Querlenker (5) sich ausgehend von der einseitigen Anlenkung an dem Achsträger (1) über zumindest nahezu die Breite des Rades (6) hinaus erstrecken und mit ihren anderen Enden an den äußeren Teilen (3a) des Fahrzeugrahmens (3) angelenkt sind.

2. Radaufhängung nach Anspruch 1, dadurch gekennzeichnet, daß der Achsträger (1) auf der Radinnenseite angeordnet ist und die Querlenker (5) an dem seitlich herabgezogenen Teil (3a) des Fahrzeugrahmens (3) gelagert sind.

3. Radaufhängung nach Anspruch 1 oder 2, dadurch gekennzeichnet, daß der Achsträger (1) über mindestens drei Querlenker (5) am Fahrzeugrahmen (3) gelagert ist, wobei mindestens zwei Querlenker (5) die Radbreite an der einen Seite übergreifen und mindestens ein Querlenker (5) die Radbreite an der gegenüberliegenden Seite dieses Rades (6) übergreift.

4. Radaufhängung nach mindestens einem der Ansprüche 1 bis 3, dadurch gekennzeichnet, daß der Achsträger (1) über zwei parallel zueinander an einer Seite des Achsträgers (1) gelagerte Längslenker (4) am Fahrzeugrahmen (3) gelagert ist.

5. Radaufhängung nach Anspruch 4, dadurch gekennzeichnet, daß die Längslenker (4) in Vertikalrichtung übereinander liegend möglichst weit voneinander beabstandet am Achsträger (1) gelagert sind.

6. Radaufhängung nach mindestens einem der Ansprüche 1 bis 5, dadurch gekennzeichnet, daß die Spur und der Radsturz der Räder (6) über die Querlenker (4, 5) einstellbar sind.

7. Radaufhängung nach mindestens einem der Ansprüche 1 bis 6, dadurch gekennzeichnet, daß der Achsstummel (8) mit dem Achsträger (1) verschraubt ist.

8. Radaufhängung nach mindestens einem der Ansprüche 1 bis 6, dadurch gekennzeichnet, daß der Achsstummel (8) mit dem Achsträger (1) verschweißt ist.

9. Radaufhängung nach mindestens einem der Ansprüche 1 bis 8, dadurch gekennzeichnet, daß zwischen dem Achsträger (1) und dem Fahrzeugrahmen (3) mindestens ein Stoßdämpfer (7) angeordnet ist.

10. Radaufhängung nach mindestens einem der Ansprüche 1 bis 9, dadurch gekennzeichnet, daß der Achsträger (1) als in Seitenansicht H-förmiges, doppelwandiges und über mehrere Querstreben versteiftes Hohlprofil ausgebildet ist.
